Europäisches Patentamt

European Patent Office

Office européen des brevets

(11) Veröffentlichungsnummer: **0 400 512 A2**

## EUROPÄISCHE PATENTANMELDUNG

(21) Anmeldenummer: 90110038.8

(22) Anmeldetag: 28.05.90

(51) Int. Cl.5: **G01N 21/71, G01N 1/00, G01N 21/31**

(30) Priorität: 02.06.89 DE 3917956

(43) Veröffentlichungstag der Anmeldung:
**05.12.90 Patentblatt 90/49**

(84) Benannte Vertragsstaaten:
**AT DE GB IT**

(71) Anmelder: **BODENSEEWERK PERKIN-ELMER GMBH**
**Askaniaweg 4**
**D-7770 Uberlingen/Bodensee(DE)**

(72) Erfinder: **Huber, Bernhard**
**Hildegardring 42**
**D-7770 Ueberlingen(DE)**

(74) Vertreter: **Weisse, Jürgen, Dipl.-Phys. et al**
**Bökenbusch 41 Postfach 11 03 86**
**D-5620 Velbert 11-Langenberg(DE)**

(54) **Vorrichtung zur Analyse von Proben auf Quecksilber und/oder Hydridbildner.**

(57) Bei einer Vorrichtung zur Analyse von Proben auf Quecksilber und/oder Hydridbildner mittels der Atomabsorptions- Spektroskopie sind zur Quecksilberbestimmung nach dem Amalgamverfahren einem Reaktionsgefäß (10) durchgangdrosselnde Mittel in Form einer Waschflasche (14) und ein Rohr (24) nachgeschaltet, das mit der Meßküvette (26) verbunden ist und in welchem ein beheizbares und wiederabkühlbares Goldnetz (28) angeordnet ist. Zwischen Reaktionsgefäß (10) und Waschflasche (14) zweigt eine Leitung (50) ab, welche unter Umgehung des Goldnetzes (28) direkt zu der Meßküvette (26) geführt ist. Das Rohr (24) ist zwischen der Waschflasche (14) und dem Goldnetz (28) über ein erstes Absperrventil (44) mit einer Trägergasquelle verbindbar. In der direkt zu der Meßküvette (26) geführten Leitung (50) ist ein zweites Absperrventil (54) angeordnet. Das erste und das zweite Absperrventil (44,54) sind so miteinander verriegelt, daß bei Öffnen des ersten Absperrventils (44) das zweite Absperrventil (54) schließt.

EP 0 400 512 A2

## Vorrichtung zur Analyse von Proben auf Quecksilber und/oder Hydridbildner

### Technisches Gebiet

Die Erfindung betrifft eine Vorrichtung zur Analyse von Proben auf Quecksilber und/oder Hydridbildner mittels der Atomabsorptions- Spektroskopie mit einem Reaktionsgefäß, in welches die Probe zusammen mit einem Reagenz einleitbar ist, und einer mit dem Reaktionsgefäß über eine Leitung verbindbaren rohrförmigen Meßküvette, durch welche das Meßlichtbündel eines Atomabsorptions- Spektrometers hindurchleitbar ist.

Es gilt die Konzentration eines gesuchten Elements in einer Probe zu bestimmen. Bei der Atomabsorptions-Spektroskopie wird zu diesem Zweck eine "Atomwolke" erzeugt, in welcher das gesuchte Element in atomarem Zustand vorliegt. Durch diese Atomwolke wird ein Meßlichtbündel von einer linienemittierenden Lichtquelle hindurchgeschickt, welches die Resonanzlinien des gesuchten Elements enthält. Dieses Meßlichtbündel wird spezifisch von den Atomen des gesuchten Elements absorbiert. Die Schwächung des Meßlichtbündels stellt daher ein Maß für die Menge der Atome des gesuchten Elements in der Atomwolke dar.

Ein Verfahren der Atomisierung des gesuchten Elements in der Probe besteht darin, durch Zugabe eines Reagenz ein flüchtiges Hydrid des gesuchten Elements zu erzeugen. Dieses Hydrid wird dann in einer vom Meßlichtbündel durchsetzten, beheizten Meßküvette zersetzt. Das gesuchte Element tritt dann in der Meßküvette in atomarem Zustand auf.

In ähnlicher Weise kann Quecksilber aus einer Probe durch ein Reagenz ausgetrieben und durch einen Trägergasstrom in die Meßküvette überführt werden.

Die Erfindung betrifft eine Einrichtung zur Bestimmung von Hydridbildnern und von Quecksilber nach diesem Verfahren.

### Zugrundeliegender Stand der Technik

Vorrichtungen, bei denen eine Probe in einem Reaktionsgefäß mit einem Reagenz versetzt werden und die dabei erhaltene gasförmige Meßprobe, z.B. ein flüchtiges Hydrid eines gesuchten Elements, in eine beheizte Meßküvette überführt wird, sind in verschiedener Form bekannt. Beispiele für solche Vorrichtungen sind die DE-PS 26 27 255, DE-PS 26 40 285, DE-AS 27 18 381, DE-OS 27 29 744 und DE-AS 27 35 281. Weitere Vorrichtungen dieser Art zeigen die DE-AS 28 51 058, DE-PS 27 48 685, DE-PS 32 26 234 und DE-PS 32 26 235. Die DE-OS 35 25 166 zeigt eine Anordnung, bei welcher flüchtige Hydride einem Plasma-Emissionsgerät oder einer Meßküvette zugeführt werden, wobei durch Proben- und Reagenzpumpen die Probe und das Reagenz wahlweise schnell zusammengebracht werden können oder im kontinuierlichen Betrieb bei langsamer Vorbewegung der Pumpenkolben über eine längere Meßzeit hinweg kontinuierliche Flüssigkeitsströme erzeugt werden.

Die DE-AS 29 43 092 beschreibt zum Stand der Technik ein Verfahren, bei welchem Quecksilber aus der Probe mittels eines Reduktionsmittels ausgetrieben wird. Zur Bestimmung kleiner Quecksilbermengen wird der durch die Reduktion erhaltene Quecksilberdampf zur Anreicherung über Silber- oder Goldwolle geleitet. Dabei bildet das Quecksilber mit dem Silber bzw. Gold ein Amalgam. Das so als Amalgam gebundene Quecksilber kann anschließend durch Erhitzen wieder ausgetrieben und in eine Meßküvette geleitet werden. In der Meßküvette wird dabei eine höhere Quecksilberkonzentration erhalten als bei der direkten Messung des durch das Reduktionsmittel aus der Probenlösung ausgetriebenen Quecksilberdampfes. Auf diese Weise kann die Empfindlichkeit etwa um den Faktor 10 gesteigert werden.

Nach der Lehre der DE-AS 29 43 092 erfolgt die Abscheidung des Quecksilbers nicht durch Austreiben von Quecksilberdampf aus einer Probenlösung mittels eines Reduktionsmittels sondern durch Elektrolyse der Probenlösung.

Die DE-OS 37 23 178 zeigt eine Fließinjektionsvorrichtung, bei welcher mittels einer Schlauchpumpe eine Strömung von Reagenz zu einem Meßgerät erzeugt wird. Durch ein Umschaltventil mit einer Rohrschleife, das in einer Leitung einer Trägerflüssigkeit liegt, wird eine in der Rohrschleife enthaltene Probenflüssigkeit in die Strömung von Reagenz eingeleitet. Das Reagenz ist ein Reduktionsmittel, welches aus hydridbildenden Bestandteilen der Probenflüssigkeit, wie Arsen, entsprechende flüchtige Hydride erzeugt, die in einem Gasabscheider aus der Flüssigkeitsströmung abgeschieden und in eine beheizte Meßküvette geleitet werden. Der Gasabscheider bildet hier das "Reaktionsgefäß".

Die bekannten Einrichtungen gestatten nur entweder die direkte Messung von Quecksilber oder Hydridbildnern oder die Anreicherung von Quecksilber in Form eines Amalgams. Der Wechsel von einem Verfahren zum anderen erfordert einen Umbau der Apparatur.

Die DE-A-33 44 914 beschreibt eine Vorrichtung zur Analyse von flüchtige Verbindungen bildenden Komponenten einer Flüssigkeit mit einem physikalischen Analysengerät. Ein Reaktionsgefäß weist an seinem unteren Ende ein Auslaßventil auf. Am oberen Ende des Reaktionsgefäßes sitzt ein an einen Spülflüssigkeitsbehälter angeschlossenes Spülventil. In der unteren Hälfte des Reaktionsgefäßes mündet eine Dosierleitung mit einem Einlaßventil. Über die Dosierleitung wird mittels einer Schlauchpumpe Probenflüssigkeit aus Probengefäßen in das Reaktionsgefäß gefördert. Die Probengefäße sitzen auf einem Drehtisch. Die Ventile werden von einer Programmsteuerung so gesteuert, daß nach jeder Analyse Reaktionsgefäß entleert und dann mit Spülflüssigkeit gespült wird und daß dann neue Probe zugeführt und mit Reagenz versetzt wird.

Die WO-A-88/08 527 beschreibt eine Graphitrohrküvette zur Atomisierung flüssiger Proben. In ein Graphitrohr wird durch eine Einlaßöffnung eine flüssige Probe eingebracht. Die Atomisierung erfolgt dadurch, daß ein starker elektrischer Strom durch das Graphitrohr hindurchgeleitet wird. Das Graphitrohr ist dabei von einem Schutzgasstrom umströmt. Es sind Mittel zum Einleiten von reaktiven Gasen in die das Graphitrohr enthaltende Kammer vorgesehen. Dadurch können reduzierende, oxydierende oder neutrale Umgebungsbedingungen in der Kammer erzeugt oder auch der pH-Wert verändert werden.

In dem Buch von Welz "Atomabsorptionsspektrometrie" Verlag Chemie (1983), 71 - 84 sind Analysenmethoden beschrieben, bei denen durch Zugabe von Reagenzien flüchtige Hydride aus flüssigen Proben erzeugt werden. Es wird beschrieben, wie diese Hydride dann atomisiert werden und wie der Vorgang automatisiert werden kann.

Ein Aufsatz von Mertens und Althaus in "Fresenius Zeitschrift für analytische Chemie" (1983) 316: 696 - 698 beschreibt ein Verfahren zur Bestimmung von Quecksilber mit Hilfe der Amalgamtechnik unter Verwendung von Hydroxylammoniumchlorid und Natriumborhydrid oder Zinn (II)-Chlorid. Auch dabei wird einer flüssigen Probe in einem Reaktionsgefäß ein Reduktionsmittel zugesetzt. Der gebildete Quecksilberdampf wird von einem Stickstoffstrom durch eine Waschflasche und einen Aerosolabscheider gespült und fließt über ein Gold-Platin-Netz. Dort erfolgt eine Anreicherung des Quecksilbers durch Amalgambildung. Durch eine Heizung wird das angereicherte Quecksilber ausgetrieben und mittels Atomabsorptions-Spektroskopie in einer Meßküvette bestimmt.

Ein Aufsatz von Messerschmidt und Tölg in "Fresenius Zeitschrift für Analytische Chemie" (1987) 327:233-234 beschreibt die Bestimmung von Selen. Dabei wird Selen in einer flüssigen Probe durch Natriumborhydrid in ein flüchtiges Hydrid umgewandelt und von einem Heliumstrom durch ein Adsorptionsrohr transportiert. Das Adsorptionsrohr kann durch flüssigen Stickstoff gekühlt werden, wodurch eine Adsorption des Selenhydrids an einem Adsorbens erfolgt. Nach solcher Anreicherung kann das Selenhydrid durch schnelles Aufheizen des Adsorptionsrohres ausgetrieben und in die Meßküvette eines Atomabsorptionsspektrometers geleitet werden.

Die AT-PS 350 508 zeigt ein Verfahren zur quantitativen Bestimmung von Quecksilber in organischen Materialien. In ein die Probe enthaltendes Reaktionsgefäß wird mittels einer Schlauchpumpe ein Reagenz eingeleitet. Ebenso wird diesem Reaktionsgefäß ein Trägergasstrom zugeführt. Der gebildete Quecksilberdampf wird über ein Trocknungsrohr einem Adsorptionsrohr zugeleitet. Dort wird das Quecksilber angereichert und schließlich durch Beheizen des Adsorptionsrohres ausgetrieben und einer Meßküvette zugeführt.

Die DE-A-30 44 627 zeigt eine Vorrichtung zur Probeneingabe in ein Graphitrohr bei der flammenlosen Atomabsorptions-Spektroskopie. Eine Probe wird auf einen in das Graphitrohr einführbaren tiegelförmigen Probenträger aufgebracht. Dieser Probenträger wird mit einer Heizeinrichtung außerhalb des Probenträgers zum Trocknen und Veraschen der Probe kontaktlos beheizt.

**Offenbarung der Erfindung**

Der Erfindung liegt die Aufgabe zugrunde, eine Apparatur zu schaffen, welche ohne Umbau wahlweise eine Analyse von Hydridbildnern, eine direkte Analyse von Quecksilber ohne Anreicherung oder eine Analyse von Quecksilber mit Anreicherung des Quecksilbers als Amalgam gestattet.

Erfindungsgemäß wird diese Aufgabe dadurch gelöst, daß

(a) zur Quecksilberbestimmung nach dem Amalgamverfahren dem Reaktionsgefäß durchgangsdrosselnde Mittel und ein Rohr nachgeschaltet sind, das mit der Meßküvette verbunden ist und in welchem ein beheizbares und wiederabkühlbares Goldnetz angeordnet ist,

(b) zwischen Reaktionsgefäß und durchgangsdrosselnden Mitteln eine Leitung abzweigt, welche unter Umgehung des Goldnetzes direkt zu der Meßküvette geführt ist,

(c) das Rohr zwischen den durchgangsdrosselnden Mitteln und dem Goldnetz über ein erstes Absperrventil mit einer Trägergasquelle verbindbar ist,

(d) in der direkt zu der Meßküvette geführten Leitung ein zweites Absperrventil angeordnet ist und

(e) das erste und das zweite Absperrventil so miteinander verriegelt sind, daß bei Öffnen des ersten Absperrventils das zweite Absperrventil schließt.

Wenn das erste Absperrventil geschlossen ist, ist das zweite Absperrventil offen. Das aus dem Reaktionsgefäß (Gasabscheider) austretende Gas fließt dann durch das zweite Absperrventil und über die zugehörige Leitung direkt zu der Meßküvette. Die durchgangsdrosselnden Mittel verhindern dann einen Gasstrom zu dem Rohr mit dem Goldnetz. Das ist die Betriebsweise bei der Analyse üblicher Hydridbildner oder bei der direkten Messung von Quecksilber ohne Anreicherung. Wenn das erste Absperrventil öffnet, wird das zweite Absperrventil geschlossen. Der Gasstrom muß jetzt über die durchgangsdrosselnden Mittel über das Goldnetz fließen. Das Goldnetz ist relativ kalt, so daß sich Quecksilber als Amalgam auf dem Goldnetz anreichert. Durch Erhitzen des Goldnetzes wird das Quecksilber anschließend freigesetzt, so daß es von dem Trägergasstrom gasförmig mit erhöhter Konzentration zu der Meßküvette transportiert wird. Ein Umbau der Apparatur ist zum Übergang von einer Betriebsweise zur anderen nicht erforderlich.

Ausgestaltungen der Erfindung sind Gegenstand der Unteransprüche.

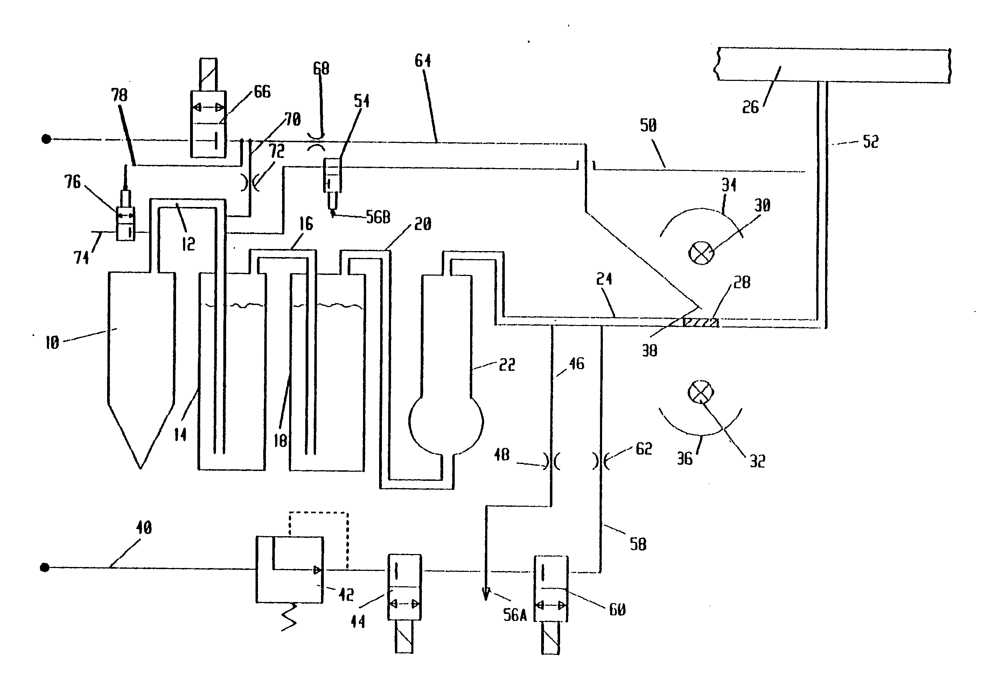

## Kurze Beschreibung der Zeichnung

Ein Ausführungsbeispiel der Erfindung ist nachstehend unter Bezugnahme auf die zugehörige Zeichnung näher erläutert, die schematisch den Aufbau einer Vorrichtung zeigt, durch welche wahlweise gebildete Hydride von Probenbestandteilen unmittelbar zu einer Meßküvette geleitet wird oder Quecksilber zur Anreicherung als Amalgam zunächst über ein Goldnetz stömt und später das Quecksilber durch Erhitzen ausgetrieben wird und mit erhöhter Konzentration zu der Meßküvette gelangt.

## Bevorzugte Ausführung der Erfindung

In der Figur ist mit 10 ein Gasabscheider bezeichnet. Der Gasabscheider bildet ein Reaktionsgefäß in welchem flüchtige Hydride oder Quecksilber, die durch ein Reduktionsmittel aus einer Probenflüssigkeit ausgetrieben werden, sich von der Probenflüssigkeit trennen und aus welcher diese Gase oder Dämpfe über eine Ausgangsleitung 12 abströmen. Der Gasabscheider 10 ist Teil einer Fließinjektionseinrichtung, wie sie in der oben schon erwähnten DE-OS 37 23 178 dargestellt und beschrieben ist.

Die Ausgangsleitung 12 ist in eine erste Waschflasche 14 bis in die Nähe des Bodens dieser Waschflasche 14 geführt. Von der Oberseite der dicht abgeschlossenen Waschflasche 14 geht eine Ausgangsleitung 16 ab, die in eine zweite Waschflasche bis in die Nähe des Bodens dieser zweiten Waschflasche 18 geführt ist. Von der oberseite der dicht abgeschlossenen zweiten Waschflasche 18 geht eine Ausgangsleitung 20 ab, die zu einem Ende eines Trockenrohres 22 geführt ist. Von dem anderen Ende des Trockenrohres 22 geht ein Rohr 24 ab. Das Rohr 24 ist zu einer Meßküvette 26 geführt.

In dem Rohr 24 sitzt als amalgambildender Körper großer Oberfläche ein Goldnetz 28. Das Goldnetz 28 kann durch Lampen 30,32 mit Reflektoren 34,36 beheizt werden. Das Rohr 24 ist ein Quarzrohr. Die Wärmestrahlung von den Lampen 30 und 32 kann daher weitgehend ungeschwächt durch die Wandung des Rohres hindurchtreten und von dem Goldnetz absorbiert werden. Durch einen Druckluftstrom von einem Druckluftauslaß 38 können das Rohr 24 und das Goldnetz 28 nach einer Aufheizung und nach Abschalten der Lampen 30 und 32 schnell wieder abgekühlt werden.

Über eine Trägergasleitung 40 wird ein inertes Trägergas, z.B. Argon, zugeführt. Der Druck des Trägergases wird durch einen Druckregler 42 geregelt. Stromab von dem Druckregler sitzt in der Trägergasleitung 40 ein erstes Absperrventil 44. Das erste Absperrventil 44 ist ein Magnetventil. Das erste Absperrventil wird von einem Microcomputer des Atomabsorptions-Spektrometers gesteuert.

Hinter dem ersten Absperrventil 44 geht von der Trägergasleitung 40 eine erste Zweigleitung 46 aus. Die erste Zweigleitung 46 mündet in dem Rohr 24 stromauf von dem Goldnetz 28, also zwischen dem Trockenrohr 22 und dem Goldnetz 28. In der Zweigleitung 46 ist eine Drossel 48 vorgesehen. Die Drossel 48 ist so bemessen, daß bei geöffnetem ersten Absperrventil 44 über die Zweigleitung 46 ein relativ geringer Trägergasstrom von etwa 75 Milliliter pro Minute fließt.

Von der Ausgangsleitung 12 geht zwischen Reaktionsgefäß 10 und Waschflasche 14 eine Leitung 50 ab. Die Leitung 50 ist unter Umgehung der Waschflaschen 14,18, des Trockenrohres 22 und des Goldnetzes 28 unmittelbar zu der Meßküvette 26 geführt. Bei der dargestellten bevorzugten Ausführungsform mündet die Leitung 50 in einen senkrecht verlaufenden Endteil 52 des Rohres 24 dicht vor dessen Mündung in den mittleren Teil der Meßküvette 26. In der Leitung 50 ist ein zweites Absperrventil 54 angeordnet. Das zweite Absperrventil 54 ist mit dem ersten Absperrventil 44 so verriegelt, daß das zweite Absperrventil 54 öffnet, wenn das erste Absperrventil 44 geschlossen ist, und das zweite Absperrventil 54 schließt, wenn das erste Absperrventil 44 geöffnet ist. Das wird dadurch erreicht, daß das zweite Absperventil 54 ein pneumatisch gesteuertes Ventil ist, das von dem Druck stromab von dem ersten Absperrventil 44 über eine Verbindung 56A, 56B gegen eine Rückstellkraft im schließenden Sinne ansteuerbar ist. Wenn das erste Absperrventil 44 öffnet, dann wirkt der Druck des Trägergases auf das zweite Absperrventil 54 und drückt das zweite Absperrventil 54 in die Schließstellung.

Das Gas, das in dem Reaktionsgefäß 10 aus der Proben- und Reagenzflüssigkeit abgeschieden wird, strömt dann über einen Teil der Ausgangsleitung 12 und über die Leitung 50 unmittelbar zur Meßküvette 26. Die Waschflasche 14 stellt hierbei eine Sperre dar, welche einen Durchgang dieses Gases durch die Waschflaschen 14,18 und das Trockenrohr 22 und über das Goldnetz 28 verhindert.

Von der Trägergasleitung 40 geht stromab von dem ersten Absperrventil 44 und parallel zu der ersten Zweigleitung 46 eine zweite Zweigleitung 58 ab. In der zweiten Zweigleitung 58 sind ein drittes Absperrventil 60 und eine Strömungsdrossel 62 angeordnet. Die Stömungsdrossel ist so bemessen, daß bei geöffneten Absperrventilen 44 und 60 über die zweite Zweigleitung ein Trägergasstrom fließt, der wesentlich größer ist als der Trägergasstrom in der ersten Zweigleitung 46. Der Trägergasstrom in der zweiten Zweigleitung 58 beträgt etwa 1000 Milliliter pro Minute.

Das Goldnetz 28 und das Rohr 24 können durch einen Druckluftstrom gekühlt werden, der durch den Druckluftauslaß 38 austritt. Der Druckluftauslaß 38 ist mit einer Druckluftleitung 64 verbunden. In der Druckluftleitung 64 ist ein viertes Absperrventil 66 angeordnet. Stromab von dem vierten Absperrventil 66 sitzt eine Strömungsdrossel 68. Zwischen dem vierten Absperrventil 66 und der Strömungsdrossel 68 zweigt eine Spülleitung 70 ab. Die Spülleitung 70 ist zu der Ausgangsleitung 12 des Reaktionsgefäßes 10 dicht stromauf von der Waschflasche 14 geführt. Die Spülleitung 70 enthält eine Strömungsdrossel 72. Die Ausgangsleitung 12 ist dicht hinter dem Reaktionsgefäß 10 über einen Auslaß 74 mit der Atmosphäre verbindbar. Der Auslaß 74 wird von einem fünften Absperrventil 76 beherrscht. Das fünfte Absperrventil 76 ist mit dem vierten Absperrventil 66 so verriegelt, daß das fünfte Absperrventil öffnet, wenn das vierte Absperrventil öffnet. Zu diesem Zweck ist das fünfte Absperrventil 76 als pneumatisch gesteuertes Ventil ausgebildet. Das fünfte Absperrventil 76 ist mit der Druckluftleitung 64 stromab von dem vierten Absperrventil 66 über eine Steuerleitung 78 verbunden. Beim öffnen des vierten Absperrventils 66 drückt der Druck in der Druckluftleitung 64 stromauf von der Strömungsdrossel 68 das fünfte Absperrventil 76 gegen eine Rückstellkraft in die Offenstellung.

Die beschriebene Anordnung arbeitet wie folgt: Bei der Analyse eines Hydridbildners bleibt das erste Absperrventil 44 geschlossen. Dadurch ist die Verbindung 56A-56B drucklos. Das pneumatisch gesteuerte zweite Absperrventil 54 ist geöffnet. Der Wasserstoff und die Hydride, die in dem Reaktionsgefäß 10 abgeschieden werden, fließt über die Leitung 50 unmittelbar zu der Meßküvette. Eine Strömung zu dem Goldnetz 28 wird durch die Wassersäule der Waschflasche 14 verhindert.

Soll eine Analyse auf Quecksilber erfolgen, bei welchem das Quecksilber nach dem Amalgamverfahren angereichert wird, wird durch den Microcomputer des Atomabsorptions-Spektrometers das als Magnetventil ausgebildete erste Absperrventil 44 geöffnet. Damit wird Druck auf die Verbindung 56A-56B gegeben und das pneumatisch gesteuerte zweite Absperrventil 54 geschlossen. Das in dem Reaktionsgefäß 10 abgeschiedene Gas (Quecksilberdampf) muß nun durch die Waschflaschen 14 und 18 und durch das Trockenrohr 22 sowie das Rohr 24 fließen. Das Gas strömt dabei über das Goldnetz 28. Das Goldnetz 28 ist dabei nicht beheizt und von einer eventuell vorher durchgeführten Analyse in noch zu beschreibender Weise abgekühlt. Das Quecksilber wird daher auf der Oberfläche des Goldnetzes 28 als Amalgam gebunden und angereichert. Wenn eine genügende Anreicherung des Quecksilbers erreicht ist, wird das Goldnetz durch Einschalten der Lampen 30,32 beheizt. Durch das Aufheizen zersetzt sich das Amalgam, und das Quecksilber wird von dem über die erste Zweigleitung 46 fließenden, relativ schwachen Trägergasstrom zu der Meßküvette 26 transportiert. Dabei ergibt sich gegenüber einer direkten Einleitung des Quecksilberdampfes in die Meßküvette 26 eine Erhöhung der Konzentration um etwa einen Faktor zehn und ein entsprechend erhöhtes Meßsignal. Außerdem wird der Einfluß von störenden anderen Bestandteilen der Probe weiter vermindert.

Im Anschluß an die Messung wird das dritte Absperrventil geöffnet. Das dritte Absperrventil ist ebenfalls als Magnetventil ausgebildet und wird von dem Microcomputer des Atomabsorptions-Spektrometers gesteuert. Durch Öffnen des dritten Absperrventils 60 wird über die zweite Zweigleitung 58 ein erhöhter Trägergasstrom durch das Rohr 24 geleitet. Das Rohr 24 wird dadurch gespült.

Die Lampen 30 und 32 werden ausgeschaltet. Dann öffnet das vierte Absperrventil 66. Ein Druckluftstrahl aus dem Druckluftauslaß 38 wird gegen das Rohr 24 im Bereich des Goldnetzes 28 geleitet und kühlt das Rohr 24 und das Godnetz 28 schnell ab, so daß die Apparatur nach kurzer Zeit schon wieder für die nächste Analyse mit kühlem Goldnetz 28 zur Verfügung steht. Durch das Öffnen des vierten Absperrventils 66 wird auch das fünfte Absperrventil 76 über die Steuerleitung 78 aufgedrückt. Über die Spülleitung wird Druckluft in die Ausgangsleitung 12 und durch den Auslaß 74 in die Atmosphäre geblasen. Dieser Druckluftstrom drückt Tropfen, die sich in der Ausgangsleitung 12 gesammelt haben können, in das Reaktionsgefäß 10, also den Gasabscheider, zurück.

## Ansprüche

1. Vorrichtung zur Analyse von Proben auf Quecksilber und/oder Hydridbildner mittels der Atomabsorptions-Spektroskopie mit einem Reaktionsgefäß, in welches die Probe zusammen mit einem Reagenz einleitbar ist, und einer mit dem Reaktionsgefäß über eine Leitung verbindbaren rohrförmigen Meßküvette, durch welche das Meßlichtbündel eines Atomabsorptions-Spektrometers hindurchleitbar ist,
**dadurch gekennzeichnet, daß**

(a) zur Quecksilberbestimmung nach dem Amalgamverfahren dem Reaktionsgefäß (10) durchgangdrosselnde Mittel (14) und ein Rohr (24) nachgeschaltet sind, das mit der Meßküvette (26) verbunden ist und in welchem ein beheizbarer und wiederabkühlbarer amalgambildender Körper (28) mit großer Oberfläche angeordnet ist,

(b) zwischen Reaktionsgefäß (10) und durchgangdrosselnden Mitteln (14) eine Leitung (50) abzweigt, welche unter Umgehung des amalgambildenden Körpers (28) direkt zu der Meßküvette (26) geführt ist,

(c) das Rohr (24) zwischen den durchgangdrosselnden Mitteln (14) und dem amalgambildenden Körper (28) über ein erstes Absperrventil (44) mit einer Trägergasquelle verbindbar ist,

(d) in der direkt zu der Meßküvette (26) geführten Leitung (50) ein zweites Absperrventil (54) angeordnet ist und

(e) das erste und das zweite Absperrventil (44,54) so miteinander verriegelt sind, daß bei Öffnen des ersten Absperrventils (44) das zweite Absperrventil (54) schließt.

2. Vorrichtung nach Anspruch 1, **dadurch gekennzeichnet, daß**

(a) dem Rohr (24) mit dem amalgambildenden Körper (28) eine Waschflasche (14) und ein Trockenrohr (22) vorgeschaltet sind, und

(b) die durchgangsdrosselnden Mittel von der Waschflasche (14) gebildet sind.

3. Vorrichtung nach Anspruch 1, **dadurch gekennzeichnet, daß** das zweite Absperrventil (54) ein pneumatisch gesteuertes Absperrventil ist, das von dem Trägergasdruck stromab von dem ersten Absperrventil (44) aus seiner normalen Offenstellung in die Schließstellung bewegbar ist.

4. Vorrichtung nach Anspruch 3, **dadurch ge-**

**kennzeichnet, daß**

(a) das erste Absperrventil (44) mit dem Rohr (24) über zwei parallele Zweigleitungen (46,58) verbunden ist, in denen je eine Strömungsdrossel (48,62) angeordnet ist, wobei der Strömungswiderstand der Strömungsdrossel (48) in einer ersten dieser Zweigleitungen (46) eine relativ geringe Strömung und der Strömungswiderstand der Strömungsdrossel (62) in der zweiten dieser Zweigleitungen (58) eine wesentlich höhere Strömung zuläßt, und

(b) in der zweiten der besagten Zweigleitungen (58) ein drittes Absperrventil (60) angeordnet ist.

5. Vorrichtung nach Anspruch 1, **dadurch gekennzeichnet, daß**

(a) zur Abkühlung des Rohres (24) und des amalgambildenden Körpers (28) ein Druckluftauslaß (38) vorgesehen ist, über welchen ein Druckluftstrahl auf das Rohr (24) im Bereich des Goldnetzes (28) geleitet wird, und

(b) der Druckluftauslaß (38) mit einer Druckluftleitung (64) verbunden ist, in welcher ein viertes Absperrventil (66) sowie eine Strömungsdrossel (68) angeordnet sind.

6. Vorrichtung nach den Ansprüchen 2 und 5, **dadurch gekennzeichnet, daß**

(a) von der Druckluftleitung (64) zwischen dem vierten Absperrventil (66) und der in der Druckluftleitung (64) vorgesehenen Strömungsdrossel (68) eine mit einer Strömungsdrossel (72) versehene Spülleitung (70) abzweigt, die mit einer Ausgangsleitung (12) zwischen Reaktionsgefäß (10) und Waschflasche (14) dicht stromauf von der Waschflasche (14) verbunden ist,

(b) die Ausgangsleitung (12) zwischen Reaktionsgefäß (10) und Waschflasche (14) dicht stromab von dem Reaktionsgefäß (10) über ein fünftes Absperrventil (76) mit der Atmosphäre verbunden ist und

(c) das fünfte Absperrventil (76) so ansteuerbar ist, daß es zusammen mit dem vierten Absperrventil (66) öffnet.

7. Vorrichtung nach Anspruch 6, **dadurch gekennzeichnet, daß**

(a) das fünfte Absperrventil (76) ein pneumatisch gesteuertes Absperrventil ist und

(b) hinter dem vierten Absperrventil (66) von der Druckluftleitung (64) eine Steuerleitung (78) abzweigt, über welche das fünfte Absperrventil (76) im öffnenden Sinne ansteuerbar ist.

8. Vorrichtung nach Anspruch 2, **dadurch gekennzeichnet, daß** zwischen der besagten Waschflasche (14) und dem Trockenrohr (22) eine weitere Waschflasche (18) vorgesehen ist.

9. Vorrichtung nach Anspruch 1, **dadurch gekennzeichnet, daß** das Rohr (24) mit dem amalgambildenden Körper (28) durch eine Strahlungsheizung (30,32,34,36) beheizbar ist.